# EUROPEAN PATENT APPLICATION

(11) **EP 4 600 615 A1**
(43) Date of publication of application: **13.08.2025**
(21) Application number: 25156907.5
(22) Date of filing: 10.02.2025
(51) Int. Cl.: G01F 1/68, G01N 25/18, G01N 27/14

(54) **THERMAL SENSOR**

(30) Priority: 12.02.2024 LU 506392; 12.02.2024 US 202418439196
(71) Applicant: FLUSSO LIMITED, Cambridge, Cambridgeshire CB3 0QH (GB)
(72) Inventor: Dixon, Sean, Cambridge, CB3 0QH (GB); HART, Alison Claire, Cambridge, CB3 0QH (GB); ALI, Syed Zeeshan, Cambridge, CB3 0QH (GB)
(74) Representative: Marks & Clerk LLP

(57) **Abstract**

A thermal sensor comprising: a supply voltage input configured to receive a supply voltage; a differential circuit, the differential circuit comprising a first element configured to provide a first sensing signal, and a first reference element configured to provide a first reference signal; and a controller configured to: obtain a measured supply voltage value, the measured supply voltage value corresponding to a measurement of the supply voltage received by the supply voltage input; obtain a differential measurement between the first sensing signal and the first reference signal; and determine a sensor output value based on the measured supply voltage value and the differential measurement. A method for operating a thermal sensor is also described.

## Description

### TECHNICAL FIELD

The present disclosure relates to thermal sensors, in particular but not exclusively to thermal conductivity sensors.

### BACKGROUND

Thermal sensors are sensors which are based on the use of a heating element to help detect a target stimulus. Examples of thermal sensor include thermal conductivity gas or fluid sensors, thermal flow sensors, catalytic gas sensors (also called calorimeters or pellistors), resistive gas or fluid sensors, some examples of particle sensors and thermal pressure sensors or Pirani sensors.

Thermal sensors may comprise a reference element to enable compensation, for example, of the effects of ambient temperature on the sensor measurement.

Thermal sensors may be affected by variation of the supply voltage so that their accuracy is decreased.

Thermal conductivity sensors use a sensing element to detect a change when the heating element is exposed to a target stimulus, or target stimuli (e.g. a target fluid composition, a fluid component concentration, or fluid flow rate, a fluid temperature and/or variations thereof). For example, the sensing element may detect a change in resistance of a heating element or a change in the current or voltage applied to it.

The sensing element and the heating element may be one single element providing both heating and sensing functions or they may be separate elements. In the second case, the sensing element is in thermal contact with the heating element.

Variations in the supply voltage provided to a thermal conductivity sensor to bring the heating element at the operational temperature, may be caused, for example, by degradation or drift of one or more components of the supply voltage source and/or circuitry. Degradation or drift may be caused by unrecoverable modifications due to variation of the external temperature. In some cases, variations of the supply voltage can affect the sensing element and the reference element differently. Variations in the supply voltage may, therefore, introduce noise which can reduce the accuracy of the sensor measurement.

Highly stable supply voltage sources and/or circuitry are known but are very expensive and may affect the overall cost of a thermal sensor.

There remains a need for a cost effective and reliable way of mitigating the effect of supply voltage variations on the accuracy of thermal sensors.

### SUMMARY

The present disclosure provides a way to address the imbalance that may be introduced by variations in the supply voltage, and may affect the accuracy of the measurements of a thermal sensor.

Described herein is, therefore, a thermal sensor comprising: a supply voltage input configured to receive a supply voltage; a differential circuit, the differential circuit comprising a first element configured to provide a first sensing signal, and a first reference element configured to provide a first reference signal; and a controller configured to: obtain a measured supply voltage value, the measured supply voltage value corresponding to a measurement of the supply voltage received by the supply voltage input; obtain a differential measurement between the first sensing signal and the first reference signal; and determine a sensor output value based on the measured supply voltage value and the differential measurement.

In the sensor according to the present disclosure, the actual supply voltage may be measured (e.g. using a supply voltage measurement circuit) at any time, and used to generate a more accurate sensor output. The controller may use the measured supply voltage value to correct the output of the sensor or to compensate the variation of the supply voltage.

In some examples, the first element is configured as a heating and sensing element (for example, the first element may comprise a heating element, e.g. a heater). The first element (heating and sensing element) may be connected to the supply voltage input (e.g. the differential circuit comprising the first element may be connected to the supply voltage) so that the supply voltage is provided to the first element. In this case, in use, a change in the heating element (resistance, applied voltage, applied current etc.) may be used to determine any effect of any target stimuli.

Alternatively, or in addition, the thermal sensor may further comprise a separate heating element, wherein the first element is configured as a sensing element in thermal contact with the heating element, i.e. the heating element may exchange thermal energy with the sensing element so that the sensing element may detect a change, e.g., a change in temperature, of the heating element which may correspond to a target stimulus.

The heating element may be connected to the supply voltage input, e.g. through a heating circuit, so that the power is provided to the heating element. The required power may be provided to the heating element by setting a constant voltage, a constant current, a constant power or a constant temperature mode of operation of the sensor. In this example, the differential circuit may be connected to the supply voltage input, or it may be connected to a different voltage.

The sensing element, being in thermal contact with the heating element or the same element as the heating element, generates a signal which, being combined with the reference signal may correspond to a response of the sensor to the target stimulus/i, or absence thereof, and may be affected by supply voltage variations.

The signal generated by the sensing element may comprise, for example, a voltage or a current.

The signal generated by the reference element may comprise, for example, a voltage or a current.

As an example of a differential circuit, a bridge circuit may comprise a sensing element and a reference element. A bridge circuit may help to cancel out or mitigate common-mode effects, i.e. effects that affect both the sensing element and the reference element, such as noise, external temperature, and, in some instances, supply voltage variations.

In use, the reference element is not affected by the target stimulus or stimuli, while the sensing element, either directly or indirectly, is. However, both are affected by the common-mode effects. As a result, if a differential measurement is performed between the sensing element and reference element, the common-mode effects cancel out and the sensor output is only affected by the target stimulus/stimuli.

However, for thermal sensors (e.g. sensors employing a heating element), in use, the sensing element is heated (e.g. being in thermal contact with the heating element) but the reference element is not and, because of that, the bridge circuit does not cancel out supply voltage variations, effectively. Generally, the resistance of the heating element is sensitive to temperature. A change in supply voltage, with respect to the predetermined or set supply voltage value may cause a change in the expected heating power, and hence in the temperature reached by the heating element. This may result in a change in resistance of the heating element, with respect to the expected resistance corresponding to the set supply voltage. This change will not be reflected in the resistance of the reference element. As a result, even in the absence of a target stimulus, a change in supply voltage may cause a change in the differential signal between the signal generated by the sensing element (which is determined by the heating element) and the signal generated by the reference element, thus creating an inaccuracy in the sensor output.

In some examples, the controller may be configured to supply the supply voltage to the sensor (i.e. to the supply voltage input). In other cases, the supply voltage may be provided by a separate supply voltage source.

Measuring the supply voltage may involve a direct or indirect measurement. Measuring the supply voltage may make use of a supply voltage measurement circuit or component which may allow a measuring method that is robust, such as an analog to digital converter where the reference supply is temperature compensated. For example, a supply voltage measurement circuit may be connected to the voltage input.

In cases where the supply voltage value is close to or above the higher limit of the range of the measurement component, e.g. an analog to digital converter, one way to measure the actual supply voltage is to use a supply voltage measurement circuit comprising a potential divider, or, in other words, two resistors with respective known resistance, in a potential divider configuration.

The potential divider may be connected to the same potential or voltage as the heating element (which may be connected to the supply voltage input through a heating circuit, which heating circuit may be part of a bridge circuit or may be a separate heating circuit) and/or to the same potential or voltage as the bridge circuit. For example, the potential divider may be connected between the supply voltage input and the ground, and it may measure the voltage across the resistor which is connected to the ground. The value of the resistance of the two resistors, may be chosen so that the voltage measured across the resistor which is connected to the ground is suitably lower that the higher limit of the range of the measurement component, e.g. an analog to digital converter. By knowing the resistance value of the two resistors of the potential divider, the voltage across the resistor connected to the supply voltage can be calculated. This enables determination of the actual value of the supply voltage, the measured supply voltage, at a specific time. The measured value may be used to mitigate the effect of any changes in supply voltage on the accuracy of the sensor output.

It will be understood that the supply voltage, also referred to as a nominal supply voltage or set supply voltage, corresponds to a predetermined supply voltage value that is expected to be provided to circuitry comprising a heating element (which may be the first element) when the sensor is in use. The measured supply voltage corresponds to a measured supply voltage value of the voltage supplied to the same circuitry. The actual or measured supply voltage may be continuously monitored, or it may be measured at specific times, depending on the sensor operational settings.

The effect of supply voltage variation from the predetermined value may be pre-characterized. This may enable a correction to be calculated for the sensor that can be added to (or subtracted from) the actual sensor reading based on the offset of the supply voltage from a reference level, for example the nominal or expected supply voltage value. The sensor may be calibrated at a fixed (nominal) supply voltage and the offset from such voltage value may be calculated based on the measured supply voltage.

A differential measurement may comprise a differential measurement of a temperature, a voltage, and/or a current.

A sensor output value may correspond to a measured presence, concentration, flow rate, and/or temperature of a fluid or fluid component as the target stimulus.

In some implementations, the heating element or the first (heating and sensing) element may be driven in a feedback loop so to maintain the differential signal between the first element and first reference element substantially equal to zero. In such a case, the bias applied to the heating element along with the measured supply voltage is used to determine the sensor output. It will be understood that using said bias is another way of using the differential measurement according to the present disclosure.

The controller may be further configured to output a sensor output value.

Also described herein is a method for operating a thermal sensor, the method comprising: receiving a supply voltage; obtaining a measured supply voltage value, the measured supply voltage value corresponding to a measurement of the received supply voltage; obtaining a differential measurement between a first sensing signal provided by a first element, and a first reference signal provided by a first reference element; and determining a sensor output value based on the measured supply voltage value and the differential measurement.

Advantageously, a sensor and method according to the present disclosure may provide improved measurement accuracy by enabling compensation for resistance variation (e.g. of the first element and/or a heating element) caused by voltage supply fluctuations, without the need of costly components.

The method described herein may further comprise outputting a sensor output value.

Determining the sensor output value based on the differential measurement and the measured supply voltage may comprise compensating and/or correcting a sensor output value using the measured supply voltage.

Determining the sensor output value based on the differential measurement and the measured supply voltage may comprise applying a bias to the heating element or first (heating end sensing) element so to maintain the differential measurement substantially equal to zero.

The first element, any heating element, and/or any heating and sensing element may be a resistive element or resistor, a diode, a transistor or any other suitable element known in the art.

A sensing element may comprise a temperature sensor, a resistor, a diode, a transistor, a thermopile, a thermocouple or any other suitable element known in the art.

Having separate heating and sensing elements may make the sensing circuit less complex, and/or it may allow to choose a sensing element with properties which may be optimized for a specific application (whereas optimizing the properties of a combined element may be significantly less effective). A higher resistance element may be used as a sensing element, so that it is more sensitive to changes in temperature, for a given temperature value or range of values. This may also allow to use different materials from those typically used for a heating element, such as a semiconductor that is not a purely resistive material. Having an additional element, may add heat to the system, in use, and this may require to be taken into account and/or to be compensated for. A separate heating element may also require a separate heating circuit. Similarly this allows a material to be used for the sensing element that is more sensitive to the target stimulus. For example, the sensing element may comprise a material with a much higher Temperature Coefficient of Resistance (TCR) than the material used for the heating element, improving the sensitivity to temperature changes caused by a stimulus, for example in thermal conductivity gas sensors. Or for resistive gas sensors, the sensing element may be made of a material whose resistance is sensitive to a target gas.

The reference element may comprise a temperature sensor (e.g. a temperature sensor configured to sense an ambient temperature). The reference element may be a resistor, a diode, a transistor or any other suitable element known in the art.

In some examples, one or both of the first element and the first reference element comprise a resistor.

In some examples, one or both of the first element and the first reference element comprises a diode.

In some examples, one or both of the first element and the first reference element comprises a transistor.

The first element and the first reference element may be identical (e.g. the first element and the first reference element may comprise identical components, or an identical combination of components, and/or the first element and the first reference element may be configured to exhibit identical behavior).

In some examples, the first reference element may be configured to sense an atmospheric or room temperature.

In some examples, the first reference element may be arranged, or located, on or in a substrate.

The first reference element may be configured to sense a temperature of the substrate.

The first element and the first reference element are substantially thermally isolated from each other. For example, the first reference element may not be significantly affected by any variations of temperature, resistance, applied current and or applied supply voltage experienced by the heating element, and detected by the sensing element, as a result of exposure of the sensor to a target stimulus.

In some examples, the first element and the first reference element are connected in a bridge configuration, for example a Wheatstone bridge. For example, the first element may be located on a first leg, or sensing leg, of the bridge. The first reference element may be located on a second leg, or reference leg, of the bridge.

The sensor may comprise a fixed resistor connected in series with either the first reference element or the first element. The fixed resistor enables the resistances of both the first reference element and the first element (where one of the resistances is a resistance of a combination of either the first reference element or the first element with the fixed resistor), or the resistances of both portions of a bridge configuration, to be a same value when the first element and/or heating element is at its operational temperature but in the absence of target stimuli.

If both the first element and the first reference element have the same resistance at room temperature, during operation, the first element will be at a higher temperature and so will have higher resistance than the first reference element, and a fixed resistor can be connected in series with the first reference element to balance this out.

For example, the fixed resistor may be connected in series with the first reference element, and a fixed resistor resistance may be such that a nominal first element resistance is equal to a sum of the fixed resistor resistance and a nominal first reference element resistance; or, in other implementations, the fixed resistor may be connected in series with the first element, and the fixed resistor resistance may be such that the nominal first reference element resistance is equal to a sum of the fixed resistor resistance and the nominal first element resistance.

It will be understood that a "nominal" first element resistance, or "nominal" reference element resistance, is a resistance of the first element or reference element, respectively, when the element is at an operating temperature but not exposed to a target stimulus.

In some examples, the first element and the first reference element are connected in a bridge configuration, for example a Wheatstone bridge, comprising two fixed resistors referred to respectively as a first bridge fixed resistor and a second bridge fixed resistor which may be connected in series with the sensing element and the reference element, respectively. The resistances of the first bridge fixed resistor and the second bridge fixed resistor are chosen such that the bridge is balanced, i.e. the voltage between the two portions of the bridge is substantially equal to zero at the operating temperature in the absence of any target stimuli. The first bridge fixed resistor and the second bridge fixed resistor may have a same resistance.

Where the sensing element is also the heating element, the first and second bridge fixed resistors may be chosen such that at a nominal supply voltage and nominal external temperature, the heating element reaches a required temperature above the external temperature. The actual required temperature reached by the heating and sensing element may vary as the external temperature changes. Of course, depending on the application the required temperature above the external temperature may be different (for example in a range between 25°C to 600°C).

A "fixed" resistor refers to a resistor having a fixed, or constant, associated nominal resistance value. It will be understood that any fixed resistor may be subject to slight resistance variations, e.g. due to a variation in the external temperature or degradation. It will further be understood that a fixed resistor is not significantly affected by any target stimulus.

Even though specific mention is made of fixed resistors, it will be appreciated that one or more of the resistors described in the present disclosure, in some implementations, may be variable resistors, i.e. resistors whose electrical resistance may be changed. Fixed resistors may be preferable as they are, generally, more stable, precise, and reliable. Variable resistors may provide a degree of flexibility to the device, if needed.

The sensor may comprise a substrate on which the first element may be provided. The substrate may be, for example, but not limited to, a semiconductor substrate. The substrate may comprise a cavity. Additionally or instead, the substrate may be provided with one or more additional layers on its surface facing the first element and/or the heating element, and one or more of those additional layers may be provided with a cavity. The sensor may comprise a dielectric layer disposed over the substrate and the cavity. The dielectric layer may comprise at least one dielectric membrane located over the cavity. For example, the cavity may define the dielectric membrane in the dielectric layer. The dielectric membrane may be provided with the heating element and the first (sensing) element as separate elements or with the first element as a combined heating and sensing element. The first reference element may be provided outside the dielectric membrane, preferably on or in a region of the dielectric layer. In alternative examples, the first reference element may be provided on or in the dialectic membrane as long as the first reference element is thermally isolated from the heating element, for example by providing a discontinuity or a recess in the membrane between the heating element and the reference element. This arrangement may provide more compact sensors.

In other configurations, the sensor may comprise a second dielectric membrane and the first reference element may be provided on or within the second dielectric membrane.

This configuration may help to partially compensate for changes in external temperature or supply voltage. In this case, the first reference element may also heat up to a high temperature, but the second membrane may be designed such that it is not affected by the target stimulus/stimuli. For example, in a thermal conductivity sensor, the second membrane may be in a sealed portion and isolated from the external atmosphere, or when used as part of a resistive gas sensor or a catalytic sensor, it may have the sensing material or catalyst coated with a material suitable to prevent interaction of the sensing material or the catalyst with a target gas.

The first reference element may be configured or arranged such that the heat produced by the first reference element when a voltage is applied to the Wheatstone bridge circuit does not cause significant self-heating of the reference element, for example, because the first reference element may be in good thermal contact with the substrate which has a high thermal conductivity and/or the first reference element may have a lower current applied to it with respect to the first element and/or heating element.

The heating element or the first element (e.g. combined element) may be arranged or configured such that the heat produced by the heating element, when the supply voltage is applied, causes the heating element to increase its temperature to the operational temperature. For example, the heating element may be disposed, or located, over or in the vicinity of a cavity, the cavity being in or in proximity of the substrate, so that the heating element may be in contact mostly with the surrounding atmosphere and/or the membrane both of which may have lower thermal conductivity than the substrate. In other words, the substrate temperature is only minimally increased due to operation of the heating element, while the heating element goes to a high temperature, i.e. the operational temperature.

Therefore, upon application of the supply voltage, the temperature of the sensing element may reach a higher value compared to the temperature of the reference element.

In some examples, the sensor may further comprise a second element and a second reference element. Including a second element and a second reference element may improve the sensitivity of the sensor, e.g. by a factor of 2.

The second element may be configured to provide a second sensing signal, and the second reference element may be configured to provide a second reference signal. The second element may be configured as a sensing element or a combined heating and sensing element.

The controller may be configured to determine a second differential measurement between the second sensing signal and the second reference signal. The controller may be configured to determine the sensor output value based additionally on the second differential measurement.

All of the sensing and reference elements (i.e. the first sensing element, the second sensing element, the first reference element, and the second reference element) may be arranged in a bridge configuration, e.g. a Wheatstone bridge. The bridge configuration may further comprise a second fixed resistor analogous to the fixed resistor described above.

In some examples, the sensor may comprise a micro-electromechanical system (MEMS) chip.

The sensor may be configured as one or more of a fluid sensor, a gas sensor, and/or a fluid flow sensor. More generally, the sensor described herein may be configured to sense one or more target stimuli.

### BRIEF DESCRIPTION OF THE DRAWINGS

The present invention will now be described by way of example with reference to the following drawings:
Figure 1 shows a diagram of part of circuit of a sensor according to the present disclosure;
Figure 2 shows a top view of an example of a sensor according to the present disclosure;
Figure 3 shows a cross-sectional view of an example of a sensor according to the present disclosure;
Figure 4 shows a diagram of part of circuit of a sensor according to the present disclosure;
Figure 5 shows a top view of an example of a sensor according to the present disclosure;
Figure 6 shows a top view of an example of a sensor according to the present disclosure;
Figure 7 shows a diagram of part of circuit of a sensor according to the present disclosure;
Figure 8 shows a diagram of part of a circuit of a sensor comprising two sensing elements and two reference elements according to the present disclosure;
Figure 9 shows a top view of an example of a sensor comprising two sensing elements and two reference elements according to the present disclosure; and
Figure 10 shows an example of a method according to the present disclosure.

### DETAILED DESCRIPTION

The invention will now be further described by reference to non-limiting examples.

Thermal conductivity based fluid and fluid flow sensors detect a change in the resistance of a heating element when the heating element comes into contact with a target fluid (or fluid component) or a fluid flow, or, in general, when it is exposed to a target stimulus. Such change in resistance may be detected by a sensing element. In some cases the sensing element and the heating element are combined in a heating and sensing element.

When the heating element and the sensing element are the same element, the heating and sensing element is typically a resistor. In the discussion below, reference will be made to sensing element and heating element in relation to their functions in the sensor. It will be understood that the heating element and the sensing element may be a single combined element or distinct elements. For example, the sensing element, or the combined heating and sensing element, described herein may be referred to as a first element.

The first element may be electrically connected to a controller, which may comprise a read-out circuit. In some examples according to the present disclosure, the first element may be arranged as part of a bridge circuit, in particular as part of a sensing portion (comprising two legs) of a bridge, for example a Wheatstone bridge, generally together with a first reference element, which is connected as part of a reference portion of the bridge (comprising the two other legs of the bridge). The Wheatstone bridge is completed by additional suitable fixed resistors which are chosen so that the bridge is balanced, i.e. the voltage between the two portions of the bridge is substantially equal to zero, at the sensor operational temperature in the absence of any target stimuli. This configuration is not limiting and other configurations may be used, as the person skilled in the art will appreciate.

The Wheatstone bridge circuit described above may allow an indirect measurement of the resistance of the heating element, and changes thereof, by measuring the voltage (or difference of potential) between the sensing and reference portion of the bridge, when the heating element is exposed to a target stimulus at the operational temperature. By providing a differential measurement, rather than an absolute measurement, a bridge circuit enables the cancelling of contributions to the sensor output signal (or reading) which are due to various external factors, rather than to the interaction of the heating element with the target stimulus/i, and noise, such as the noise due to variations in external temperature and/or, at least in part, of supply voltage, as these external factors affect both portions of the bridge, while only the sensing element is affected by the target stimuli.

Bridge circuits also improve the sensitivity of the measurement, e.g. by reducing the measurement range required for an analog to digital converter (ADC), because the differential voltage reading generally has a value which is much lower than the a corresponding absolute reading, where the variation of voltage due to target stimuli is superimposed to an offset, i.e. the voltage set across the heating element. Additionally, bridge circuits may make it easier to amplify the signal.

In operation, a current is applied to the heating element, so that the heating element is heated to a high temperature, e.g. in the range 100-500° C, i.e. a sensing temperature or operational temperature.

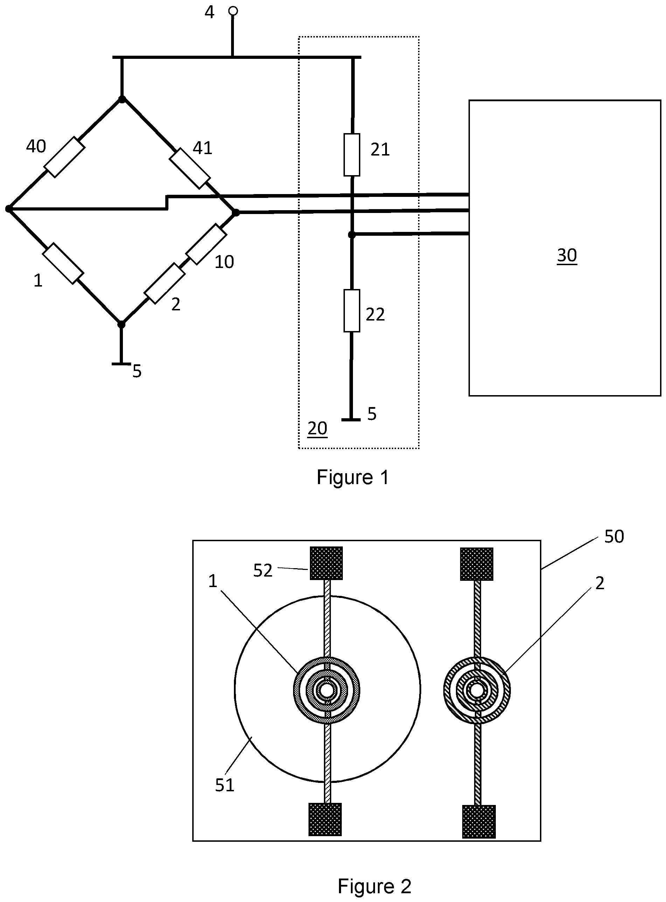

With reference to Figure 1, supply voltage is applied, via a supply voltage input 4, to a Wheatstone bridge comprising a first element 1 and a first reference element 2. In this example the first element 1 is a combined heating and sensing element. The following discussion will refer to sensing element or heating element according on the function that is described.

The supply voltage is applied to a fixed bridge resistor 40, 41 on each portion of the Wheatstone bridge to create a current which is then applied to the first element 1 and to the first reference element 2. The fixed bridge resistors 40 and 41 may have the same resistance, but this is not limiting.

An additional fixed resistor 10 is connected in series with the first reference element 2 to make the sum of the resistance of the first reference element 2 and the additional resistor 10 substantially equal to the resistance of the first element 1 at operating temperature and in the absence of target stimuli.

When using the sensor as a thermal conductivity gas sensor, or a fluid flow sensor, the heating element is normally designed to have relatively high heat or power loss to or through a target fluid (or fluid component) or fluid flow as compared to additional heat losses, for example conductive heat losses through solids. For example, the heating element may be provided on or within a dielectric membrane on a substrate, across a cavity in the substrate, so that the heating element power consumption is reduced, and a larger proportion of heat loss is to or through the fluid as compared to the membrane. It will be understood that part of the heat produced by the heating element, in the absence of target stimuli, will be lost or transferred to or through the atmosphere surrounding the heating element. When biased, the heating element will reach an operating temperature dependent on the bias and the external temperature. The resistance of the heating element is sensitive to temperature and changes when the temperature changes. As the heating element is exposed to one or more target stimuli at the operational temperature, the temperature of the heating element changes and, with it, the resistance of the heating element. Such change depends on the thermal conductivity of a fluid (or fluid component) and on the concentration of a fluid (or a fluid component) or the fluid flow rate or variations thereof. The heat loss, or, in other words, its variation compared to a situation when no target stimuli are present at the operational temperature, may be measured by a sensing element by, e.g., detecting the change in resistance of the heating element, to gain information on the composition of a fluid and/or the rate of the fluid flow.

As already discussed, the first reference element is not heated up at the same rate (or to the same extent) as the heating element is, and is not affected by the fluid composition or flow rate, because it never reaches the operational temperature.

This also means that, when a same current (if the fixed resistors 40 and 41 have the same resistance) is applied to both the heating element and the reference element, the temperature of the heating element rises to a higher value than that of the first reference element so that the resistance of the heating element increases while the resistance of the first reference element is not significantly affected.

The first reference element may be an ambient temperature sensor. It will be understood that the temperature sensed by the first reference element may be the temperature of a substrate rather than the atmospheric or room temperature. In general, it may be said that the first reference element senses the external temperature. It will further be understood that the first reference element being an external temperature sensor may allow any effect of the external temperature to be cancelled, when a differential measurement is taken, as the external temperature affects both the reference element and the sensing element.

It will further be understood that the first reference element is substantially thermally isolated from the heating element.

To balance the bridge, a fixed resistor 10 may be included, in series with the first reference element.

When the supply voltage varies, the current applied to the heating element and the reference element vary as well.

Considering, for example, the first reference element, its temperature will be not significantly affected by such variation as the first reference element is configured to undergo substantially no self-heating or very limited self-heating.

On the other hand, considering the heating element, the heat produced by the heating element causes a substantial raise in its temperature. A variation in supply voltage creates a different current from the one expected which will cause the heating element to reach a different temperature (and hence a different resistance) from the expected one, corresponding to the set supply voltage. This will affect the accuracy of the measurement of the variation of resistance of the heating element, i.e. the response of the sensor to a target stimulus/stimuli.

To avoid this, a measured supply voltage is obtained (e.g. using a supply voltage measurement circuit), and the measured supply voltage is used to adjust the differential signal or the signals obtained individually from the first element and the first reference element so as to generate a more accurate sensor output.

Going back to Figure 1, the diagram shows a supply voltage measurement circuit 20 comprising two resistors 21 and 22 with respective known fixed resistance, in a potential divider configuration. The potential divider is connected between the supply voltage and the ground 5, and it may allow measuring the voltage across the resistor 22 which is connected to the ground. Based on this value and by knowing the resistance value of the two resistors 21 and 22 of the potential divider, the measured supply voltage value can be calculated.

The signals from the two portions (sensing portion and reference portion) of the Wheatstone bridge are fed as input to the controller 30 (which may comprise a readout circuit or readout block), together with the voltage signal from the supply voltage measurement circuit 20. The controller 30 uses the signals from the Wheatstone bridge to calculate a differential signal, and uses the measurement from the supply voltage measurement circuit to generate a more accurate sensor output where effects of changes in supply voltage are cancelled out, or, at least, significantly reduced.

In alternative examples, the sensor may further be provided with a differential amplifier (not shown) between the Wheatstone bridge and the controller 30 so that a differential signal obtained from the Wheatstone bridge is fed as input to the controller 30.

It will be understood that the compensation of the signals of the Wheatstone bridge for variations of the supply voltage affecting the heating element only, as described herein, may be implemented in other ways or using different and/or additional features.

The controller 30 may comprise any type of circuitry such as a differential amplifier, buffer, analog to digital converter, a microcontroller and/or microprocessor, volatile or non-volatile memory etc. The compensation for the supply voltage variation may be done using analog circuitry or may be done digitally. The controller 30 may be on the micro-chip that also has the sensor integrated on it. In some examples, the controller 30 may be on a dedicated chip, but packaged with the sensor. In some examples, the controller 30 may be on the same circuit board as the sensor either as discrete electronics or within a chip. The controller 30 can also be on a different PCB, or different system altogether. The controller 30 could also have different functions spread in different positions - for example some within the same chip as the sensor, and some on the same PCB. It will be understood that there are many ways to arrange the controller 30.

Figure 2 shows a top view of an example sensor 50, comprising a membrane 51, and first element 1 embedded within the membrane 51 (the first element 1 being a heating and sensing element). The sensor 50 also comprises a first reference element 2 (comprising a resistive external temperature sensor) located outside the membrane region. Both the first element 1 and the first reference element 2 are connected to bond pads 52.

The first element 1 and the first reference element 2 are preferably identical (e.g., they may be configured such that they exhibit the same thermal behavior if placed in the same environment), but they may be different in some examples. The first element 1, first reference element 2, and membrane 51 are shown in Figure 2 as having a circular shape, but they can alternatively be rectangular or have any other suitable shape. The first element 1 and the first reference element 2 can also comprise wires, and/or be arranged in a meander shape. In some examples, the sensor 50 may be suitable for use as a thermal conductivity gas sensor and/or a flow sensor. Other types of sensors are also possible.

Although Figure 2 shows the sensor 50 on a chip, it will be understood that this is not essential.

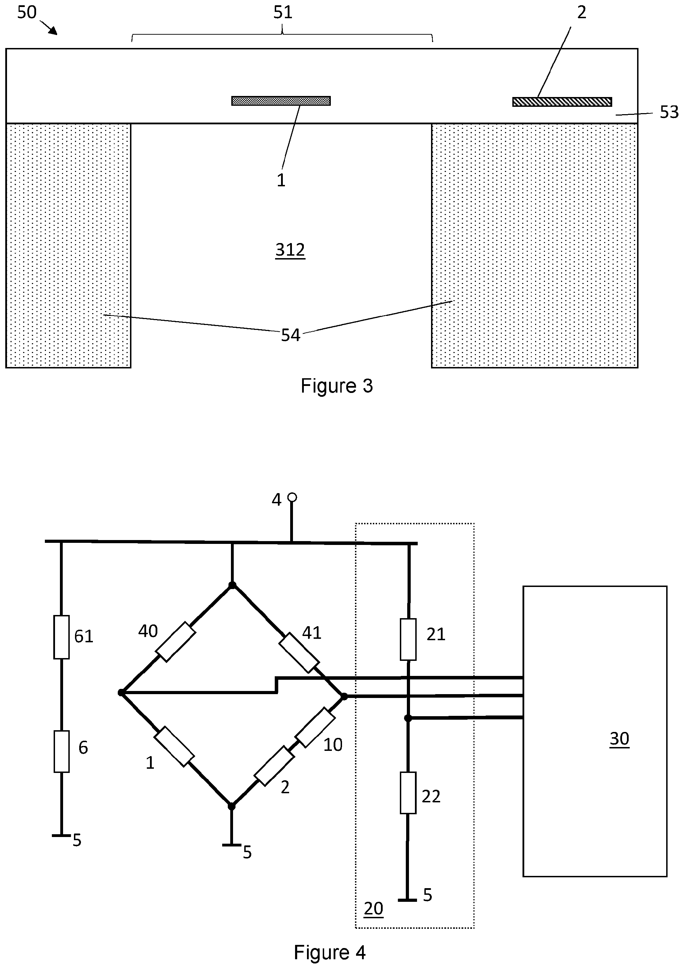

Figure 3 shows a cross-section of a sensor 50, which may correspond to the sensor 50 illustrated in Figure 2. As shown in Figure 3, the sensor 50 comprises a substrate 54 and a dielectric layer 53. The substrate 54 comprises a cavity 312, and part of the dielectric layer 53 is located over the cavity 312 to define a dielectric membrane 51. In other implementations, the dielectric membrane 51 may be formed in another suitable way, for example by being located over a cavity that is not formed in a substrate. In the example illustrated in Figure 3, the first element 1 is located in the dielectric membrane 51, and the first reference element 2 is within the dielectric layer 53, but outside the dielectric membrane 51. It will be appreciated that, in some examples, the first element 1 may be located on, rather than in, the dielectric membrane 51. Similarly, the first reference element 2 may be located on the dielectric layer 53.

The first element 1 and/or the first reference element 2 may comprise resistors comprising polysilicon, single crystal silicon, and/or a metal such as aluminum, tungsten, titanium or platinum. Alternatively, or in addition, the first element and/or the reference element 2 may comprise a diode and/or a transistor.

The substrate 54 may comprise any suitable material (e.g. a semiconductor material). Preferably, the substrate 54 comprises silicon.

The dielectric layer 53 may comprise one or more layers of one or more dielectric materials, such as silicon dioxide and/or silicon nitride, or aluminum oxide and the like or combinations thereof.

In the example illustrated in Figure 3, the cavity 312 is within the substrate 54. However, it is also possible to have an additional layer or layers (not shown) between the substrate 54 and the dielectric layer 53, and to have the cavity 312 within this additional layer (or layers) rather than the substrate 54. Such a cavity is typically formed by a front side etching process.

In some examples, where the cavity 312 is formed in the substrate 54, the cavity 312 may be formed by a front side or a back side etching process.

Figure 4 illustrates a diagram of part of a circuit of a sensor according to the present disclosure. Figure 4 shows an example where the heating element 6 and the sensing element (first element 1) are distinct elements. The supply voltage may be applied to the resistor 61 so that the heating element 6 can be heated to the operational temperature.

The same supply voltage is also applied to the Wheatstone bridge comprising the first element 1 and the first reference element 2. The Wheatstone bridge works similarly to the Wheatstone bridge of Figure 1. The first element 1 may sense the temperature of the heating element 6 which corresponds to a specific resistance of the heating element 6. If the supply voltage varies, the resistance of the heating element 6 will not be the expected value. The first element 1 may still undergo a certain degree of self-heating itself, due to the current applied through the resistor 40, which also need to be taken into account and which may be affected by supply voltage variations. The supply voltage measurement circuit 20 is used to get an accurate sensor output, as described above.

It will be understood that, in some implementations of the sensor (not shown), different supply voltages may be applied to the resistor 61 and to the Wheatstone bridge (or other suitable differential circuit). In those cases two separate supply voltage measurement circuit, one for each of the two supply voltages, may be needed since both the heating element and the sensing element may be affected by the respective supply voltage variations. It will further be understood that, if a current is applied to the heating element through a current source, rather than through a resistor, the supply voltage measurement circuit connected to the supply voltage which is connected to the current source may be dispensed with since the current source is not affected significantly by supply voltage variations. Similarly, a supply voltage may be applied to the Wheatstone bridge (or other suitable differential circuit), rather than continuously, only for a short period of time, for example 1-2 µs, which is sufficiently long for the controller to obtain a measurement but not so long that the first element may undergo significant self-heating. In those instances, a supply measurement circuit connected to the supply voltage which is connected to the Whetstone bridge may not be needed. Therefore, two supply voltage measurement circuits may be needed, or just one, when the heating element and the Wheatstone bridge are connected to two distinct supply voltages.

Having separate supply voltages may be useful to separately optimize the supply voltage used to heat the heating element and the supply voltage applied to the Wheatstone bridge. It may add some complexity to the device, though.

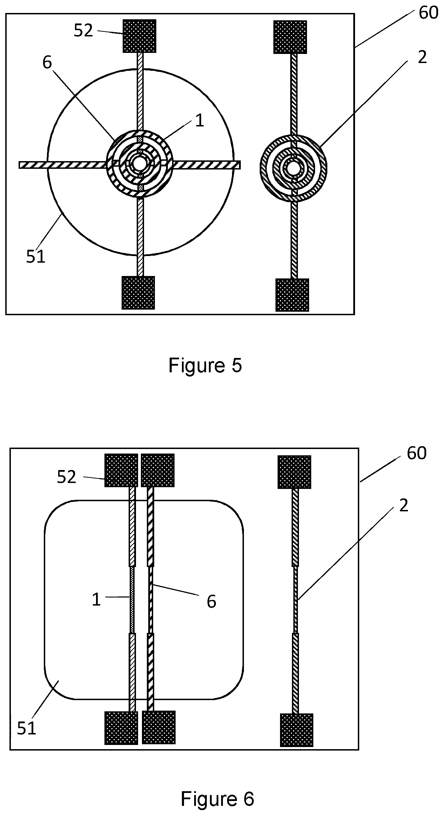

Figures 5 and 6 show top views of two example sensors 60 that may use the part of the sensor circuit shown in Figure 4. It can be noticed that both the heating element 6 and the first element 1 are provided to the membrane 51 and are in close proximity to each other so as to be in thermal contact. The reference element 2 is located outside of the membrane similarly to what is shown in Figure 2.

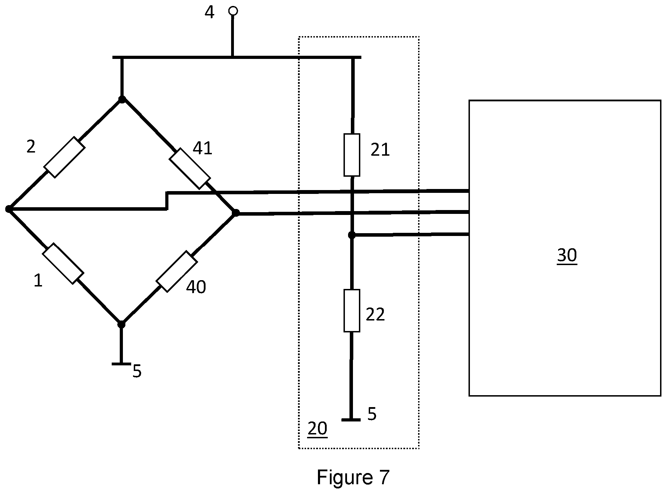

Figure 7 shows an example of a circuit with a different arrangement of the first element 1, first reference element 2 and the first and second bridge fixed resistors 40, 41. In this case, both the first element and first reference element are on one side of the bridge, and the first and second bridge fixed resistors are on the other side.

It will be understood that many arrangements of the bridge circuit are possible. In the circuit shown in Figure 7, there is no fixed resistor 10; in this case, the first and second bridge fixed resistors may be chosen such that the ratio of the resistance of the two bridge fixed resistors is the same as the ratio of the resistance of the first element and the first reference element in nominal operating conditions. This results in a balanced bridge in the nominal operating conditions. Nevertheless, a fixed resistor 10 may also be used in this configuration, and in this case the two bridge fixed resistors would have the same resistance.

Similarly, the circuits shown in Figures 1 and 4 may not be provided with a fixed resistors, but the resistance values of bridge fixed resistors 40, 41 could be different and chosen such that the bridge is balanced in nominal conditions.

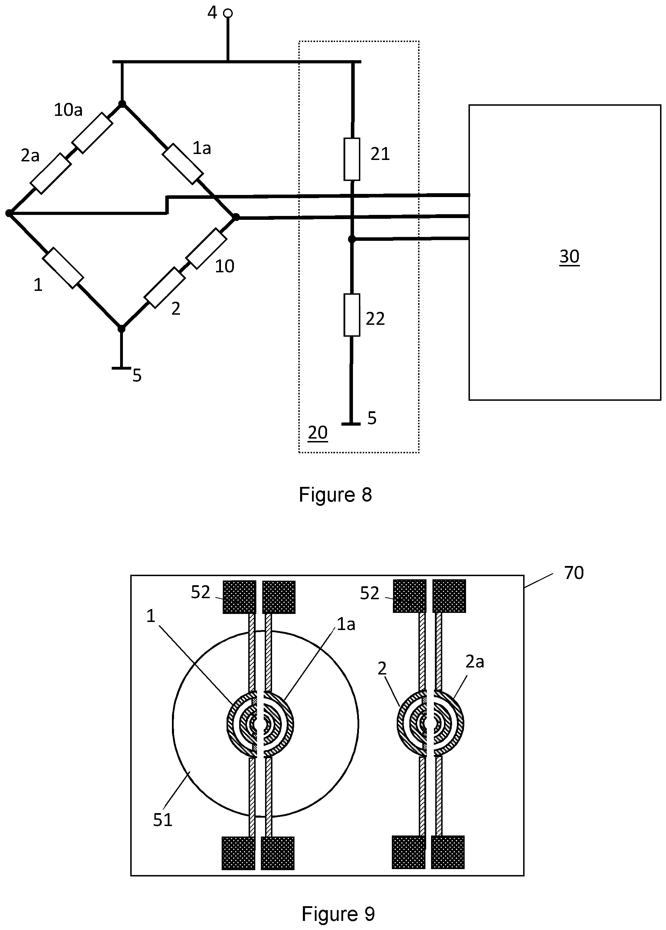

Figure 8 illustrates another example circuit for a sensor according to the present disclosure. In this example, the sensor comprises a first element 1 and a second element 1a (each configured as a heating and sensing element, similarly to the example illustrated in Figure 1), and a first reference element 2 and a second reference element 2a (each comprising a temperature sensor, similarly to the example illustrated in Figure 1). The first element 1, the second element 1a, the first reference element 2, and the second reference element 2a are all arranged as part of a Wheatstone bridge. Such a configuration, as illustrated in Figure 8, may result in doubling the sensitivity of the sensor compared to the sensor illustrated in Figure 1. A fixed resistor 10 (also referred to as a first fixed resistor) and a second fixed resistor 10a are arranged in series with the first reference element 2 and the second reference element 2a, respectively, to ensure that the sums of the resistance of the reference elements 2, 2a and their respective fixed resistors 10, 10a are equal to a resistance of the respective element 1, 1a, at the operational temperature and in the absence of any target stimuli.

Figure 9 illustrates an example of a sensor 70 comprising a dielectric membrane 51, analogous to the sensor 50 illustrated in Figure 2. The sensor 70 illustrated in Figure 9 comprises first and second element 1, 1a and first and second reference element 2, 2a and it is suitable for a sensor circuit as shown in Figure 8.

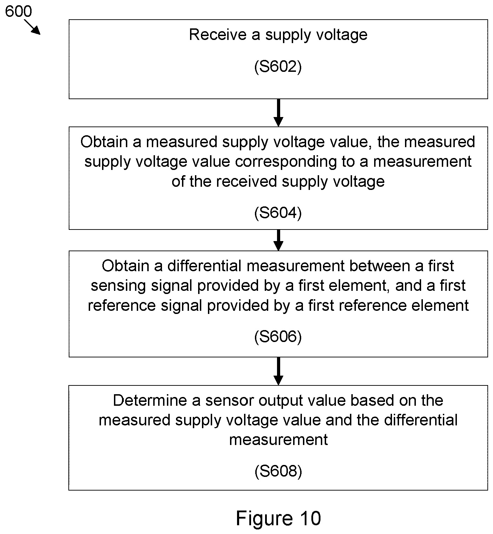

Figure 10 schematically illustrates an example method 600 according to the present disclosure. The method 600 may, in some examples, be carried out by a controller 30 as described herein. The controller 30 may comprise any suitable processing system. The method 600 may be provided as instructions to the controller 30 which, when executed by the controller 30 (e.g. by the processing system of the controller 30) cause the controller 30 to carry out the method 600. The instructions may be stored on a non-transitory computer readable medium. A non-transitory computer readable medium may include any electronic, optical, magnetic, storage device or any other storage devices capable of providing a processor with computer readable instructions and/or other program code. Non-limiting examples of a computer readable medium include a magnetic disk, a memory chip, a ROM, a RAM, an ASIC, optical storage, magnetic tape or other magnetic storage, or any other medium from which a processing device can read instructions. The instructions may include processor-specific instructions generated by a compiler or an interpreter from code written in any suitable computer-programming language, including, for example, C, C++, C#, Visual Basic, Java, Python, Perl, JavaScript, and ActionScript.

At S602, the method 600 comprises receiving a supply voltage. For example, the supply voltage may be received via a supply voltage input 4 as described herein.

At S604, the method comprises obtaining a measured supply voltage value. The measured supply voltage value corresponds to a measurement of the received supply voltage. For example, the measured supply voltage may be obtained by the controller 30 using a supply voltage measurement circuit 20 as described herein and as illustrated in Figures 1 and 4.

At S606, the method 600 comprises obtaining a differential measurement between a first sensing signal (e.g. provided by a first element), and a first reference signal (e.g. provided by a first reference element). For example, the differential measurement may comprise a differential temperature, voltage, and/or current measurement between the first element (i.e. the element that may be responding to a target stimulus) and the reference element (which may be configured to sense an external temperature. In some examples, the differential measurement may be performed as a process by the controller 30 based on inputs provided by the first (sensing) element 1 and the first reference element 2, e.g. of a sensor 50 as illustrated in Figures 1 to 3. In some examples, the differential measurement may be determined using the measured supply voltage (e.g. using the measured voltage directly, and/or determining a temperature based on the measured supply voltage).

At S608, the method 600 comprises determining a sensor output value based on the measured supply voltage value and the differential measurement. In some examples, the determination of the sensor output value may be performed as a process by the controller 30. The sensor output value may correspond to a measured presence, concentration, flow rate, and/or temperature of a fluid or fluid component. More generally, the sensor output value may correspond to a thermal conductivity of a fluid or fluid component and/or a variation thereof. Determining the sensor output value may comprise adjusting or correcting a thermal conductivity value based on the measured supply voltage to account for the effects of supply voltage variation on the sensing element as described herein.

The method 600 may further comprise comparing the measured supply voltage value to the nominal supply voltage value.

In some examples, the method 600 may further comprise outputting the sensor output value. For example, the sensor output value may be output as a signal (e.g. a voltage signal).

Further examples according to the present disclosure are described in the following non-limiting clauses:
1. A thermal sensor comprising:
   a supply voltage input configured to receive a supply voltage;
   a differential circuit, the differential circuit comprising a first element configured to provide a first sensing signal, and a first reference element configured to provide a first reference signal; and
   a controller configured to:
      obtain a measured supply voltage value, the measured supply voltage value corresponding to a measurement of the supply voltage received by the supply voltage input;
      obtain a differential measurement between the first sensing signal and the first reference signal; and
      determine a sensor output value based on the measured supply voltage value and the differential measurement.
2. The thermal sensor according to clause 1, wherein the first element is configured as a heating and sensing element.
3. The thermal sensor according to clause 1, wherein the first element is configured as a sensing element, the sensor further comprising a heating element, in thermal contact with the first element.
4. The thermal sensor according to any one of the preceding clauses, comprising a supply voltage measurement circuit, wherein the controller is configured to obtain the measured supply voltage using the supply voltage measurement circuit.
5. The thermal sensor according to clause 4, wherein the supply voltage measurement circuit comprises a potential divider.
6. The thermal sensor according to clause 4 or clause 5, wherein the supply voltage measurement circuit comprises at least two resistors connected in series between the supply voltage input and ground.
7. The thermal sensor according to any one of the preceding clauses, comprising a fixed resistor connected in series with either the first element or the first reference element.
8. The thermal sensor according to clause 7, wherein either:
   the fixed resistor is connected in series with the first reference element, and a fixed resistor resistance is such that a nominal first element resistance is equal to a sum of the fixed resistor resistance and a nominal first reference element resistance; or
   the fixed resistor is connected in series with the first element, and the fixed resistor resistance is such that a nominal first reference element resistance is equal to a sum of the fixed resistor resistance and a nominal first element resistance.
9. The thermal sensor according to any one of the preceding clauses, wherein the first element and the first reference element are connected in a bridge configuration.
10. The thermal sensor according to clause 9, wherein the bridge comprises a first bridge fixed resistor and a second bridge fixed resistor.
11. The thermal sensor according to any one of the preceding clauses, wherein at least one of the first element and the first reference element comprises a resistor.
12. The thermal sensor according to any one of the preceding clauses, wherein at least one of the first element and the first reference element comprises a diode.
13. The thermal sensor according to any one of the preceding clauses, wherein at least one of the first element and the first reference element comprises a transistor.
14. The thermal sensor according to any one of the preceding clauses, wherein the first element and the first reference element are identical.
15. The thermal sensor according to any one of the preceding clauses, further comprising:
   a substrate comprising a cavity; and
   a dielectric layer disposed over the substrate and the cavity, wherein the dielectric layer comprises at least one dielectric membrane located over the cavity;
   wherein the first element is on or within the dielectric membrane.
16. The thermal sensor according to any one of the preceding clauses, comprising a second element, and a second reference element.
17. The thermal sensor according to clause 16, wherein the first element, the second element, the first reference element, and the second reference element are arranged in a bridge configuration.
18. The thermal sensor according to any one of the preceding clauses, wherein the thermal sensor is configured as a gas sensor.
19. The thermal sensor according to any one of the preceding clauses, wherein the thermal sensor is configured as a fluid flow sensor.
20. A method for operating a thermal sensor, the method comprising:
   receiving a supply voltage;
   obtaining a measured supply voltage value, the measured supply voltage value corresponding to a measurement of the received supply voltage;
   obtaining a differential measurement between a first sensing signal provided by a first element, and a first reference signal provided by a first reference element; and
   determining a sensor output value based on the measured supply voltage value and the differential measurement.

Although the disclosure has been described in terms of preferred embodiments as set forth above, it should be understood that these embodiments are illustrative only and that the claims are not limited to those embodiments. Those skilled in the art will be able to make modifications and alternatives in view of the disclosure which are contemplated as falling within the scope of the appended claims. Each feature disclosed or illustrated in the present specification may be incorporated in the disclosure, whether alone or in any appropriate combination with any other feature disclosed or illustrated herein.

## Claims

1. A thermal sensor comprising:
a supply voltage input configured to receive a supply voltage;
a differential circuit, the differential circuit comprising a first element configured to provide a first sensing signal, and a first reference element configured to provide a first reference signal; and
a controller configured to:
obtain a measured supply voltage value, the measured supply voltage value corresponding to a measurement of the supply voltage received by the supply voltage input;
obtain a differential measurement between the first sensing signal and the first reference signal; and
determine a sensor output value based on the measured supply voltage value and the differential measurement.

2. The thermal sensor according to claim 1, wherein the first element is configured as a heating and sensing element.

3. The thermal sensor according to claim 1, wherein the first element is configured as a sensing element, the sensor further comprising a heating element, in thermal contact with the first element.

4. The thermal sensor according to any one of the preceding claims, comprising a supply voltage measurement circuit, wherein the controller is configured to obtain the measured supply voltage using the supply voltage measurement circuit, optionally wherein the supply voltage measurement circuit comprises a potential divider.

5. The thermal sensor according to claim 4, wherein the supply voltage measurement circuit comprises at least two resistors connected in series between the supply voltage input and ground.

6. The thermal sensor according to any one of the preceding claims, comprising a fixed resistor connected in series with either the first element or the first reference element.

7. The thermal sensor according to claim 6, wherein either:
the fixed resistor is connected in series with the first reference element, and a fixed resistor resistance is such that a nominal first element resistance is equal to a sum of the fixed resistor resistance and a nominal first reference element resistance; or
the fixed resistor is connected in series with the first element, and the fixed resistor resistance is such that a nominal first reference element resistance is equal to a sum of the fixed resistor resistance and a nominal first element resistance.

8. The thermal sensor according to any one of the preceding claims, wherein the first element and the first reference element are connected in a bridge configuration, optionally wherein the bridge comprises a first bridge fixed resistor and a second bridge fixed resistor.

9. The thermal sensor according to any one of the preceding claims, wherein at least one of the first element and the first reference element comprises one or more of: a resistor, a diode, and a transistor.

10. The thermal sensor according to any one of the preceding claims, wherein the first element and the first reference element are identical.

11. The thermal sensor according to any one of the preceding claims, further comprising:
a substrate comprising a cavity; and
a dielectric layer disposed over the substrate and the cavity, wherein the dielectric layer comprises at least one dielectric membrane located over the cavity;
wherein the first element is on or within the dielectric membrane.

12. The thermal sensor according to any one of the preceding claims, comprising a second element, and a second reference element; optionally:
wherein the first element, the second element, the first reference element, and the second reference element are arranged in a bridge configuration.

13. The thermal sensor according to any one of the preceding claims, wherein the thermal sensor is configured as a gas sensor.

14. The thermal sensor according to any one of the preceding claims, wherein the thermal sensor is configured as a fluid flow sensor.

15. A method for operating a thermal sensor, the method comprising:
receiving a supply voltage;
obtaining a measured supply voltage value, the measured supply voltage value corresponding to a measurement of the received supply voltage;
obtaining a differential measurement between a first sensing signal provided by a first element, and a first reference signal provided by a first reference element; and
determining a sensor output value based on the measured supply voltage value and the differential measurement.
